# FASCICULE DE BREVET EUROPEEN

(11) **EP 0 952 205 B1**
(45) Date de publication et mention de la délivrance du brevet: **25.05.2005**
(21) Numéro de dépôt: 99400914.0
(22) Date de dépôt: 14.04.1999
(51) Int. Cl.: C10L 3/02, F17C 13/04

(54) **Mélange gazeux constitué de l'acétylène et soit de l'hydrogène ou du gaz naturel**
Gasgemisch aus Acetylen und entweder Wasserstoff oder Erdgas
Gaseous mixture composed of acetylene and either hydrogen or natural gas

(30) Priorité: 20.04.1998 FR 9804925
(43) Date de publication de la demande: 27.10.1999
(73) Titulaire: L'air Liquide, S.A. à Directoire et Conseil de Surveillance pour l'Etude et l'Exploitation des Procédés Georges Claude, 75321 Paris Cedex 07 (FR)
(72) Inventeur: Cannet, Gilles, 95620 Parmain (FR); Grundmann, Joachim, 93100 Montreuil (FR)
(74) Mandataire: Pittis, Olivier

(56) Documents cités:
- DE-A- 3 433 420
- DATABASE WPI Section Ch, Week 8623 Derwent Publications Ltd., London, GB; Class H06, AN 86-147850 XP002088464 & JP 61 083292 A (KOIKE SANSO KOGYO KK) , 26 avril 1986
- DATABASE WPI Section Ch, Week 8615 Derwent Publications Ltd., London, GB; Class H06, AN 86-097584 XP002088465 & JP 61 042592 A (KOIKE SANSO KOGYO KK) , 1 mars 1986

## Description

La présente invention concerne, d'une part, un mélange gazeux combustible constitué de l'hydrogène ou du gaz naturel, et de l'acétylène, et, d'autre part, un procédé d'oxycoupage d'un métal ou d'un alliage métallique par chauffage à l'aide d'une flamme et apport d'un flux d'oxygène de coupe mettant en oeuvre un tel mélange gazeux combustible.

Classiquement, l'oxycoupage met en oeuvre, d'une part, une flamme de chauffe et, d'autre part, un jet ou flux d'oxygène de coupe.

La flamme de chauffe, habituellement nourrie par un mélange de gaz combustible et d'oxygène de chauffe, conditionne en grande partie le rendement et la qualité de l'oxycoupage.

Actuellement, les gaz combustibles connus pour l'alimentation de la flamme de chauffe sont l'acétylène, le propane, le méthane, l'hydrogène et d'autres gaz de pétrole liquéfié (G. P. L.), l'éthylène, le propylène éventuellement mélangé avec du méthylacétylène, ou encore des mélanges de gaz tels que le CRYLENE^{TM} (mélange comportant environ 73% d'éthylène, 22% d'acétylène et 5% de propylène), le TETRENE^{TM} (mélange de type MAPP comptant environ 39% de méthylacétylène et de propadiène, 44% de propylène et 17% d'un mélange de butane, propane et de leurs dérivés insaturés) ; le TETRENE^{TM} et le CRYLENE^{TM} sont commercialisés par la société L'AIR LIQUIDE.

Par ailleurs, des mélanges de gaz de pétrole liquéfié (G. P. L.) dont certains constituants comportent des radicaux -OH, sont également utilisés pour alimenter une flamme d'oxycoupage. On peut citer, par exemples, les mélanges combustibles suivants qui sont disponibles dans le commerce: FLAMEX™, CHEMTANE II™, HGX™, OU EXCELLENE™.

Or, les mélanges sophistiqués précités et les gaz spécifiques dérivés d'hydrocarbures ont des coûts relativement élevés, notamment de mise en oeuvre, étant donné qu'ils consomment beaucoup d'oxygène. Par ailleurs, ils sont souvent sensibles au froid et sont conditionnés sous une faible pression.

L'acétylène, bien que permettant d'obtenir des vitesses de coupe élevées avec de bonne qualités d'arêtes de coupe, est mal adapté aux découpes des fortes épaisseurs et est sensible au retour de flamme.

Des recherches visant à améliorer la flamme de chauffe d'un procédé d'oxycoupage ont conduit à mélanger entre eux les différents gaz ci-dessus et ont permis d'obtenir des mélanges gazeux présentant des propriétés variables pour l'application considérée.

A ce titre, on peut citer le document EP-A-0313176 décrivant un procédé de placage à la flamme à l'aide d'un canon à détonation mettant en oeuvre un mélange gazeux combustible-comburant constitué d'oxygène ou d'oxyde azoteux, en tant que comburant, et d'un prémélange d'acétylène et de propylène, méthane, éthylène, méthylacétylène, propane, pentane, butadiène, butylène, butane, oxyde d'éthylène, éthane, cyclopropane, propadiène et/ou cyclobutane, en tant que combustible.

En outre, le document US-A-3982883 enseigne un procédé de coupage à la flamme mettant en oeuvre un gaz de combustion constitué, d'une part, de propane, butane, gaz naturel, d'acétylène et leurs mélange et, d'autre part, d'un additif hydrocarboné, tels le 1-pentène, le cyclopentane, le 1-octène...

Le document JP-A-61042592 décrit, quant à lui, un mélange gazeux ternaire de combustion pour le soudage, la chauffe ou le coupage par fusion constitué de 20 à 70% de gaz naturel, 10 à 60% d'hydrogène et de 20 à 70% d'acétylène.

Par ailleurs, le document JP-A-50006003 enseigne un mélange liquide pour le soudage, la chauffe ou le coupage de métal constitué de 64 à 95% de méthane et de 5 à 35% d'éthylène.

De même, le document JP-A-530065303 décrit un mélange gazeux pour le coupage par fusion contenant du méthane, de l'éthylène et du gaz de pétrole liquéfié (G. P. L.), par exemple du propane ou du propylène.

En outre, le document FR-A-2099217 a trait à un mélange gazeux combustible destiné au chauffage, à la fusion, au soudage ou à la coupe des métaux, contenant 1 à 77% de méthylacétylène et/ou propadiène, du méthane, de l'éthane, de l'éthylène, du propane et/ou du propylène.

On peut également citer les documents JP-A-840203976 et JP-A-840161584 qui décrivent des mélanges gazeux ternaires contenant moins de 70% de gaz naturel et de 20% à 70% d'acétylène et jusqu'à 70% d'hydrogène.

Préférentiellement, selon ces documents, le mélange gazeux ternaire contient 60% d'acétylène, 20% de gaz hydrocarboné et 60% d'hydrogène.

Dans certains cas, l'oxycoupage est effectué en alimentant la flamme de chauffe avec du gaz naturel, essentiellement formé de méthane. En effet, l'emploi de gaz naturel pour l'oxycoupage présente l'avantage d'utiliser un gaz dont le coût est faible, tout en permettant de couper des éléments métalliques sur une large plage d'épaisseurs. Toutefois, il a été observé que le gaz naturel ne procure qu'une faible température de flamme, nécessite des temps de préchauffage longs et conduit, par ailleurs, à une mauvaise qualité des arêtes de coupe.

En outre, il est connu que les flammes de combustion de mélanges oxygène/hydrogène ou oxygène/gaz naturel sont relativement difficiles à régler.

En effet, pour obtenir une flamme de combustion ayant des caractéristiques acceptables, en termes notamment de puissance spécifique et de température, il est nécessaire de procéder à un contrôle et une mesure précise du rapport de consommation des gaz, ce qui nécessite la mise en oeuvre d'appareils de mesure de débits onéreux.

De plus, les flammes de combustion de type hydroxyque et les flammes de type gaz naturel/oxygène sont difficilement visibles, en particulier le cône de flamme primaire servant au réglage de la flamme.

Afin de tenter de résoudre ce problème d"'invisibilité" de la flamme, il est possible de faire passer l'hydrogène dans une solution aqueuse contenant un adjuvant destiné à colorer la flamme, par exemple un composé de type borate. Toutefois, si ces composés adjuvants permettent d'obtenir une meilleure visibilité de la flamme de combustion, ceux-ci n'améliorent pas ou que très peu les performances de la flamme.

Le but de la présente invention est donc de proposer un mélange combustible, notamment pour l'oxycoupage, ne présentant pas les inconvénients des mélanges gazeux classiques, qui permette d'obtenir des flammes visibles et ayant de bonnes performances, qui soit facile et sûr d'utilisation et de coût raisonnable, sans nécessiter l'utilisation de composés colorants de l'art antérieur.

La présente invention concerne alors un mélange gazeux combustible constitué de l'acétylène et d'un composé choisi parmi l'hydrogène et le gaz naturel, caractérisé en ce que le rapport (Qc/Qa) de la proportion (Qc) dudit composé choisi parmi l'hydrogène et le gaz naturel à la proportion (Qa) d'acétylène dudit mélange est compris entre 99 : 1 et 70,1 : 29,9.

De préférence, le rapport (Qc/Qa) est compris entre 98 : 2 et 70,2 : 29,8.

Selon un premier mode de réalisation, le mélange gazeux est constitué de l'hydrogène et de l'acétylène en une proportion d'environ 99 : 1 à environ 90 : 10, de préférence d'environ 97 : 3 à environ 94 : 6.

Selon un autre mode de réalisation, le mélange gazeux est constitué du gaz naturel et de l'acétylène en une proportion d'environ 90 : 10 à 70,3 : 29,7, de préférence 71 : 29 à 90 : 10, préférentiellement 72 : 28 à 85 : 25, préférentiellement encore 73 : 27 à 80 : 20.

Selon un autre aspect, l'invention concerne également un récipient de conditionnement contenant le mélange gazeux de l'invention, par exemples une bouteille de gaz ou une capacité de stockage.

Selon encore un autre aspect, l'invention concerne aussi un procédé de soudage choisi parmi l'oxycoupage, le perçage en pleine tôle, le brasage, la chauffe, le traitement thermique, en particulier des métaux et alliages métalliques, et le flammage notamment des granits et des marbres, dans lequel on mélange des proportions données d'acétylène et d'un composé choisi parmi l'hydrogène et le gaz naturel, et en ce qu'on obtient un mélange combustible ayant un rapport Qc/Qa selon l'invention.

De préférence, le mélange combustible est réalisé sur site d'utilisation, de préférence au moyen d'un mélangeur de gaz.

L'invention concerne également un dispositif de soudage susceptible de mettre en oeuvre un procédé selon l'invention, caractérisé en ce qu'il comporte :
- un chalumeau d'oxycombustion,
- des canalisations de gaz,
- une source d'oxygène ou d'un autre gaz comburant contenant de l'oxygène, par exemple l'air, reliée audit chalumeau,
- une source d'acétylène,
- une source de gaz naturel ou d'hydrogène,
- un mélangeur de gaz relié, en amont, auxdites sources d'acétylène et de gaz naturel ou d'hydrogène et, en aval, audit chalumeau,
- des moyens de régulation permettant de contrôler les proportions d'acétylène et de gaz naturel ou d'hydrogène introduites dans le mélangeur, de manière à obtenir un mélange gazeux combustible selon l'invention.

Dans le cadre de l'invention, les sources de gaz peuvent être, selon le cas, des récipients de conditionnement, telles des bouteilles de gaz, ou des canalisations ou conduites d'acheminement de gaz.

De préférence, le mélangeur est un mélangeur à vannes proportionnelles. En effet, il est préférable d'utiliser un mélangeur vannes proportionnels afin de pouvoir assurer un mélange C₂H₂/gaz naturel ou hydrogène prédéterminé sensiblement constant donc des performances de la flamme également constantes et ce, même pour une pression d'alimentation en gaz combustible relativement basse, par exemple inférieure à 4.10⁵ Pa.

En outre, l'utilisation d'un tel mélangeur à vannes proportionnelles permet de s'affranchir de toute capacité tampon servant à homogénéiser le mélange réalisé et à assurer une pression contante au cours du temps.

Selon l'application, il est possible d'automatiser le dispositif selon l'invention, notamment en opérant un pilotage des moyens de régulation du rapport Qc/Qa au moyen d'une commande numérique et d'une interface, ce qui permet, par ailleurs, de réaliser un contrôle en permanence et à distance, des débits et consommations de gaz.

La présente invention va maintenant être décrite plus en détail à l'aide d'exemples donnés à titre illustratif, mais non limitatif.

### Exemple 1

Un chalumeau d'oxycombustion a été alimenté avec, d'une part, de l'oxygène en tant que gaz comburant et, d'autre part, avec de l'hydrogène additionné ou non d'acétylène en tant que mélange gazeux combustible.

Ensuite, on a déterminé le temps d'amorçage obtenu avec chacun des mélanges d'oxycombustion testés, c'est-à-dire la durée nécessaire pour porter localement le métal à une température suffisante pour permettre le début de sa combustion dans l'oxygène.

Les mélanges réalisés et les résultats sont consignés dans le tableau I.

**TABLEAU I**

| **ESSAI N°** | **MELANGE H**_{**2**}**/O**_{**2**} **+ x% de C**_{**2**}**H**_{**2**} | **TEMPS D'AMORCAGE** **(valeur indicée)** |
|---|---|---|
| A | 0% C₂H₂ | 1 |
| B | 5% C₂H₂ | 0,9 |
| C | environ 30% C₂H₂ | 0,5 |

Il apparaît au vu du Tableau I que l'addition d'acétylène au mélange O₂/H₂ permet d'obtenir une diminution pouvant atteindre 50% du temps d'amorçage (essai C).

En d'autres termes, l'addition d'acétylène au mélange H₂/O₂ est particulièrement bénéfique car, d'une part, il en résulte une augmentation des propriétés de chauffe de la flamme d'oxycombustion ainsi obtenue et, d'autre part, l'ajout d'acétylène permet de diminuer le débit total du mélange combustible et donc de diminuer les coûts du procédé.

En outre, le réglage de la flamme de chauffe a été plus aisé à effectuer dans les essais B et C que dans l'essai A, étant donné que la présence de C₂H₂ permet de faciliter et d'améliorer la visualisation.

Industriellement, on réalisera préférentiellement des mélanges H₂/C₂H₂ contenant une proportion de 1 à 10% de C₂H₂, voire de 3 à 6% de C₂H₂, le reste étant essentiellement de l'hydrogène et des impuretés éventuelles.

### Exemple 2

Cet exemple est analogue à l'exemple 1, à l'exception du fait que l'acétylène a été ajouté, cette fois, à un mélange oxygène/gaz naturel.

Des résultats comparables à ceux de l'exemple 1 ont été obtenus en ce qui concerne la durée d'amorçage en présence ou en l'absence de C₂H₂.

En outre, comme précédemment, l'addition de 10 à environ 30% C₂H₂, préférentiellement de 20 à 29,5% de C₂H₂, au gaz naturel permet de créer une zone distincte, c'est-à-dire visible, en flamme primaire permettant d'aboutir à un réglage plus efficace et aisé de la flamme de combustion.

Selon l'invention, un mélange gazeux binaire contenant de 73% à 80% de gaz naturel et de 20% à 27% d'acétylène, et éventuellement des impuretés habituelles, est particulièrement préféré.

## Revendications

1. Mélange gazeux combustible constitué d'acétylène et d'un composé choisi parmi l'hydrogène et le gaz naturel, **caractérisé en ce que** le rapport (Qc/Qa) de la proportion (Qc) dudit composé choisi parmi l'hydrogène et le gaz naturel à la proportion (Qa) d'acétylène dudit mélange est compris entre 99 : 1 et 70,1 : 29,9.

2. Mélange selon la revendication 1, **caractérisé en ce que** le rapport (Qc/Qa) est compris entre 98 : 2 et 70,2 : 29,8.

3. Mélange selon la revendication 1, **caractérisé en ce qu'**il contient de l'hydrogène et de l'acétylène en une proportion (Qc/Qa) d'environ 99 : 1 à environ 90 : 10, de préférence d'environ 97 : 3 à environ 94 : 6.

4. Mélange selon la revendication 1, **caractérisé en ce qu'**il contient du gaz naturel et de l'acétylène en une proportion (Qc/Qa) d'environ 90 : 10 à environ 71 : 29, de préférence d'environ 80 : 20 à environ 73 : 27.

5. Utilisation d'un mélange combustible selon l'une des revendications 1 à 4 dans un procédé d'oxycoupage, de perçage en pleine tôle, de chauffe, de traitement thermique ou de flammage.

6. Procédé de fabrication d'un mélange gazeux binaire combustible contenant de l'hydrogène ou du gaz naturel et de l'acétylène, **caractérisé en ce qu'**on mélange des proportions données d'acétylène et d'un composé choisi parmi l'hydrogène et le gaz naturel, et **en ce qu'**on obtient un mélange gazeux combustible selon l'une des revendications 1 à 4.

7. Procédé de fabrication selon la revendication 6, **caractérisé en ce que** le mélange combustible est réalisé sur site d'utilisation, de préférence au moyen d'un mélangeur de gaz.

8. Dispositif de soudage susceptible de mettre en oeuvre un procédé selon l'une des revendications 6 ou 7, **caractérisé en ce qu'**il comporte :
- un chalumeau d'oxycombustion,
- des canalisations de gaz,
- une source d'un gaz contenant au moins de l'oxygène reliée audit chalumeau,
- une source d'acétylène,
- une source de gaz naturel ou d'hydrogène,
- un mélangeur de gaz relié, en amont, auxdites sources d'acétylène et de gaz naturel ou d'hydrogène et, en aval, audit chalumeau,
- des moyens de régulation permettant de contrôler les proportions d'acétylène et de gaz naturel ou d'hydrogène introduites dans le mélangeur, de manière à obtenir un mélange gazeux combustible selon l'une des revendications 1 à 4.

9. Dispositif selon la revendication 8, **caractérisé en ce que** le mélangeur est un mélangeur à vannes proportionnelles.

## Patentansprüche

1. Brennbares Gasgemisch, das aus Acetylen und einer Verbindung besteht, die gewählt wird unter dem Wasserstoff und dem Erdgas, **dadurch gekennzeichnet, dass** das Verhältnis (Qc/Qa) des Anteils (Qc) der unter dem Wasserstoff und dem Erdgas gewählten Verbindung und des Anteils (Qa) des Acetylens des Gemischs zwischen 99:1 und 70,1:29,9 liegt.

2. Gasgemisch nach Anspruch 1, **dadurch gekennzeichnet, dass** das Verhältnis (Qc/Qa) zwischen 98:2 und 70,2:29,8 liegt.

3. Gasgemisch nach Anspruch 1, **dadurch gekennzeichnet, dass** es Wasserstoff und Acetylen in einem Verhältnis (Qc/Qa) von ungefähr 99:1 bis ungefähr 90:10, vorzugsweise von ungefähr 87:3 bis ungefähr 94:6 enthält.

4. Gasgemisch nach Anspruch 1, **dadurch gekennzeichnet, dass** es Erdgas und Acetylen in einem Verhältnis (Qc/Qa) von ungefähr 90:1 bis ungefähr 71:29, vorzugsweise von ungefähr 80:20 bis ungefähr 73:27 enthält.

5. Verwendung eines brennbaren Gasgemisches nach einem der Ansprüche 1 bis 4 in einem Schneidbrennverfahren, beim Bohren von Blechen, beim Erhitzen, bei der thermischen Behandlung oder beim Beflammen.

6. Herstellungsverfahren für ein binäres brennbares Gasgemisch, das Wasserstoff oder Erdgas und Acetylen enthält, **dadurch gekennzeichnet, dass** man die gegebenen Mengenanteile von Acetylen und einer unter dem Wasserstoff und dem Erdgas gewählten Verbindung mischt, und dass man ein brennbares Gasgemisch nach einem der Ansprüche 1 bis 4 erhält.

7. Herstellungsverfahren nach Anspruch 6, **dadurch gekennzeichnet, dass** das brennbare Gasgemisch am Ort der Verwendung hergestellt wird, vorzugsweise mit einem Gasmischer.

8. Schweißvorrichtung, die dazu geeignet ist, ein Verfahren nach einem der Ansprüche 6 oder 8 anzuwenden, **dadurch gekennzeichnet, dass** sie umfasst:
- einen Schneidbrenner mit Sauerstoffverbrennung
- Gasleitungen,
- eine mit dem Schneidbrenner verbundene Gasquelle, die mindestens Sauerstoff enthält,
- eine Acetylenquelle
- eine Erdgas- oder Wasserstoffquelle
- einen Gasmischer, der stromaufwärts mit den Acetylen-, Erdgas- und Wasserstoffquellen verbunden ist, und stromabwärts mit dem Schneidbrenner.
- Mittel zur Regelung, die es erlauben, die Mengenanteile von Acetylen und Erdgas oder Wasserstoff, die in den Mischer eingeführt werden, zu regeln, so dass ein brennbares Gasgemisch nach einem der Ansprüche 1 bis 4 erhalten wird.

9. Vorrichtung nach Anspruch 8, **dadurch gekennzeichnet, dass** der Mischer ein Mischer mit Proportionalventilen ist.

## Claims

1. Fuel gas mixture composed of acetylene and of a compound chosen from hydrogen and natural gas, **characterized in that** the ratio (Qc/Qa) of the proportion (Qc) of the said compound chosen from hydrogen and natural gas to the proportion (Qa) of acetylene in the said mixture is between 99:1 and 70.1:29.9.

2. Mixture according to Claim 1, **characterized in that** the ratio (Qc/Qa) is between 98:2 and 70.2:29.8.

3. Mixture according to Claim 1, **characterized in that** it comprises hydrogen and acetylene in a proportion (Qc/Qa) of approximately 99:1 to approximately 90:10, preferably of approximately 97:3 to approximately 94:6.

4. Mixture according to Claim 1, **characterized in that** it comprises natural gas and acetylene in a proportion (Qc/Qa) of approximately 90:10 to approximately 71:29, preferably of approximately 80:20 to approximately 73:27.

5. Use of a fuel mixture according to one of Claims 1 to 4 in a process for oxygen cutting, for drilling a solid metal sheet, for heating, for heat treatment or for flame treatment.

6. Process for the manufacture of a binary fuel gas mixture comprising hydrogen or natural gas and acetylene, **characterized in that** given proportions of acetylene and of a compound chosen from hydrogen and natural gas are mixed, and **in that** a fuel gas mixture according to one of Claims 1 to 4 is obtained.

7. Manufacturing process according to Claim 6, **characterized in that** the fuel mixture is prepared on the site of use, preferably by means of a gas mixer.

8. Welding device which can employ a process according to either of Claims 6 and 7, **characterized in that** it comprises:
- an oxy-fuel blowpipe,
- gas pipes,
- a source of a gas comprising at least oxygen connected to the said blowpipe,
- a source of acetylene,
- a source of natural gas or of hydrogen,
- a gas mixer connected upstream to the said acetylene and natural gas or hydrogen sources and downstream to the said blowpipe,
- regulating means which make it possible to control the proportions of acetylene and of natural gas or of hydrogen introduced into the mixer, so as to obtain a fuel gas mixture according to one of Claims 1 to 4.

9. Device according to Claim 8, **characterized in that** the mixer is a mixer with proportional valves.
